# EUROPÄISCHE PATENTSCHRIFT

(11) **EP 0 825 374 B1**
(45) Veröffentlichungstag und Bekanntmachung des Hinweises auf die Patenterteilung: **29.08.2001**
(21) Anmeldenummer: 97108277.1
(22) Anmeldetag: 22.05.1997
(51) Int. Cl.: F16L 15/04, F16L 41/10

(54) **Dichtungsanordnung**
Sealing arrangement
Dispositif d'étanchéité

(30) Priorität: 16.08.1996 DE 19632956
(43) Veröffentlichungstag der Anmeldung: 25.02.1998
(73) Patentinhaber: ROBERT BOSCH GMBH, 70442 Stuttgart (DE)
(72) Erfinder: Rief, Peter, 87527 Sonthofen (DE); Hellebrandt, Michael, Dipl.-Ing., 87545 Burgberg (DE)

(56) Entgegenhaltungen:
- EP-A- 0 241 350
- EP-A- 0 326 292
- FR-A- 1 489 542

## Beschreibung

### Stand der Technik

Die Erfindung betrifft eine Dichtungsanordnung für eine fluiddichte Verschraubung an einem Hydraulik- oder Pneumatikbauteil mit den Merkmalen des Oberbegriffs des Anspruchs 1.

Eine bekannte, derartige Dichtungsanordnung weist einen sog. U-Seal Dichtring auf. Dies ist ein Metallring, in dessen Loch der eigentliche Dichtring aus gummielastischem Material anvulkanisiert ist. Der Dichtring weist trapezförmigen Schnurquerschnitt auf, wobei die kürzere der einander parallelen Trapezränder an den Metallring anvulkanisiert ist und die umlaufenden Kanten des Dichtrings an den Ecken der längeren Grundseite des Trapezquerschnitts überstehende Dichtlippen bilden. Der U-Seal Dichtring wird beispielsweise unter den Kopf einer Verschlußschraube oder einen Radialflansch einer Einschraubmuffe untergelegt, die in ein fluidführendes Gewindeloch eines Bauteils eingeschraubt wird. Die mechanische Kraftübertragung erfolgt vom Schraubenkopf oder Muffenflansch über den Metallring des U-Seal Dichtrings auf das Bauteil. Der Metallring gibt zugleich die Verspannung des eigentlichen Dichtrings vor. Der eigentliche Dichtring liegt an der Unterseite des Schraubenkopfs oder der Rohrmuffe und an einer Oberfläche des Bauteils an und dichtet die Schraube oder Einschraubmuffe am Bauteil ab. Diese Art der Abdichtung hat den Nachteil, daß die Herstellung des U-Seal Dichtrings mit dem Metallring und dem anvulkanisierten gummielastischen Dichtring verhältnismäßig aufwendig und infolgedessen teuer ist.

Weiterhin ist es bekannt, die Mündung der Innengewindebohrung im Bauteil mit einer Ansenkung zu versehen, in die ein über die Oberfläche des Bauteils vorstehender, gummielastischer Dichtring, beispielsweise ein O-Ring oder ein RechteckDichtring eingelegt wird. Beim Einschrauben der Schraube oder Muffe wird der Dichtring auf die Tiefe der Ansenkung elastisch zusammengedrückt und liegt dadurch dichtend am Grund der Ansenkung und an der Unterseite des Schraubenkopfs oder des Muffenflansches an. Die Kraftübertragung erfolgt unmittelbar von der Unterseite des Schraubenkopfs oder des Muffenflansches auf die Oberfläche des Bauteils. Diese Dichtungsanordnung hat jedoch den Nachteil, daß der Dichtring beim Einschrauben der Schraube oder der Einschraubmuffe in tangentialer Richtung belastet wird, wodurch insbesondere ein Rechteckdichtring in einen Spalt zwischen Unterseite des Schraubenkopfs oder Muffenflansches und des Bauteils gelangen und dort eingeklemmt werden kann, wodurch der Dichtring beschädigt wird. Des weiteren verursacht der eingeklemmte Dichtring einen Extrusionsspalt, in den unter Druckbeaufschlagung der Dichtungswerkstoff nachfließt, wodurch es bald zum Ausfall der Dichtungsanordnung kommt. Hinzu kommt, daß sich die Reibung beim Anziehen der Schraube oder Einschraubmuffe durch den zwischen der Unterseite des Schraubenkopfs oder des Muffenflansches und dem Bauteil eingeklemmten Dichtungswerkstoff und damit das Anzugsdrehmoment ändert, was ebenfalls zum Ausfall der Dichtungsanordnung führen kann. Ein O-Ring kann sich durch die Tangentialkraft beim Einschrauben der Schraube oder der Einschraubmuffe verdrillen, was seine Dichtfunktion ebenfalls beeinträchtigt und zur Zerstörung des O-Rings führen kann.

Die Patentoffenlegungsschrift EP 0 326 292 A zeigt eine Verschraubung mit einem in eine Gewindebohrung eines Bauteils eingeschraubten Einschraubelement. Die Verschraubung hat eine Dichtungsanordnung mit einer Ringdichtung in einer Ansenkung. Allerdings gibt es bei dieser Dichtungsanordnung Probleme beim Anbringen der Ringdichtung an dem Einschraubelement, und wegen einem relativ großen Spalt während des Einschraubvorgangs im Bereich der Ringdichtung zwischen dem Einschraubelement und dem Bauteil ist die Gefahr einer Beschädigung der Ringdichtung ziemlich groß, und das Vorspannen der Ringdichtung ist bei dieser Dichtungsanordnung auch bei enger Tolerierung der verschraubten Bauteile mit erheblichen Toleranzen behaftet.

Auch die FR 1 489 542 A zeigt eine Dichtungsanordnung mit einer Ringdichtung, wobei auch hier, auch bei Einhaltung enger Maßtoleranzen der zu verschraubenden Bauteile, eine erhebliche Streuung bei der Pressung der Ringdichtung und eine Beschädigung der Ringdichtung während des Zusammenbaus befürchtet werden muß.

### Vorteile der Erfindung

Die erfindungsgemäße Dichtungsanordnung weist eine Ansenkung an der Mündung der Innengewindebohrung auf, die so tief oder tiefer wie der eingelegte Dichtring dick ist. Der Dichtring steht dadurch in unbelastetem Zustand nicht über die Oberfläche des Bauteils vor, wird also über seine gesamte Höhe von der Ansenkung umfaßt. Dadurch wird verhindert, daß sich der Dichtring durch die beim Einschrauben der Schraube oder Einschraubmuffe auf ihn wirkende Tangentialkraft in den Spalt zwischen Schraubenkopf oder Muffenflansch und Bauteil hineinverformt und dort einklemmt. Um den Dichtring vorzuspannen, so daß er dichtend an der Unterseite des Schraubenkopfs oder Muffenflansches und der Grundfläche der Ansenkung anliegt, weist die Unterseite des Schraubenkopfs oder des Muffenflansches einen Bund auf, der beim Einschrauben der Schraube oder Einschraubmuffe in die Ansenkung des Bauteils hineingelangt, den Dichtring zusammendrückt und dadurch vorspannt. Auf diese Weise wird mit einem einfachen Dichtring eine zuverlässige, hochdruckfeste Abdichtung erzielt.

Die Unteransprüche haben vorteilhafte Ausgestaltungen und Weiterbildungen der im Anspruch 1 angegebenen Dichtungsanordnung zum Gegenstand.

Der Dichtring der erfindungsgemäßen Dichtungsanordnung ist gemäß Anspruch 2 vorzugsweise ein Rechteckdichtring. Dieser hat gegenüber beispielsweise einem O-Ring den Vorteil, daß er auch bei unebenen Oberflächen zuverlässig abdichtet, d. h. er erfordert eine geringere Oberflächengüte am Grund der Ansenkung und auf der Unterseite des Schraubenkopfs oder des Muffenflansches.

### Zeichnung

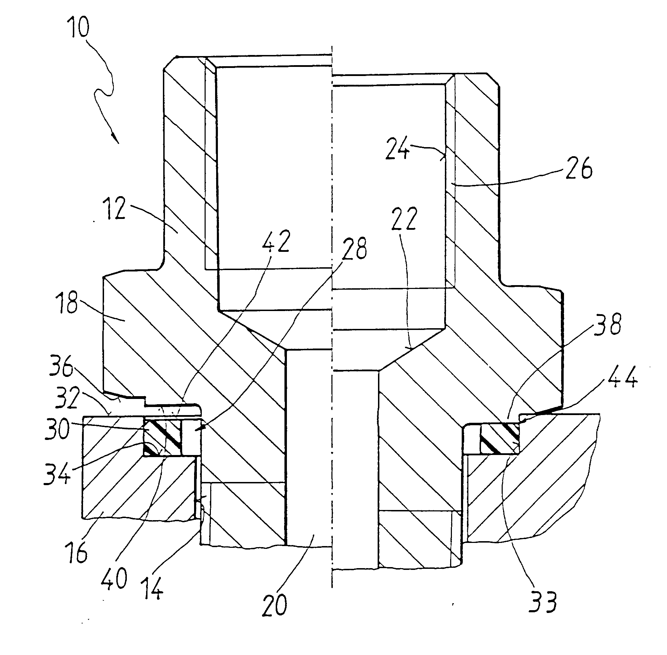

Die Erfindung wird nachfolgend anhand eines in der Zeichnung dargestellten Ausführungsbeispiels näher erläutert. Die einzige Figur zeigt einen Achsschnitt durch eine erfindungsgemäße Dichtungsanordnung, wobei die linke Bildhälfte einen lose eingeschraubten Zustand und die rechte Bildhälfte einen angezogenen Zustand zeigt.

### Beschreibung des Ausführungsbeispiels

Die in der Zeichnung dargestellte, erfindungsgemäße Dichtungsanordnung 10 weist eine Hohlschraube 12 auf, die in eine fluidführende Gewindebohrung 14 eines Bauteils 16 eingeschraubt ist, von dem in der Zeichnung nur ein Bruchstück dargestellt ist. Die Hohlschraube 12 weist einen Sechskantflansch 18 zum Ansetzen eines nicht dargestellten Schraubenschlüssels auf. Eine dem Bauteil 16 zugewandte Unterseite 36 des Sechskantflansches 18 bildet eine radial überstehende Ringschulterfläche zum Verspannen der Hohlschraube 12 mit dem Bauteil 16.

Eine Axialbohrung 20 der Hohlschraube 12 erweitert sich mit einem Dichtkonus 22 und geht daran anschließend in einen zylindrischen Endabschnitt 24 über, der zum fluiddichten Verschrauben mit einer einen genormten Schneidring tragenden, nicht dargestellten Rohrleitung mit einem Innengewinde 26 versehen ist.

An einer Mündung der fluidführenden Gewindebohrung 14 ist eine Ansenkung 28 rechteckigen Querschnitts angebracht, in die ein Dichtring 30 mit rechteckigem Schnurquerschnitt (Rechteckdichtring 30) eingelegt ist. Der Rechteckdichtring 30 ist in axialer Richtung weniger dick, als die Ansenkung 28 tief ist, d. h. er ist unter eine Oberfläche 32 des Bauteils 16 versenkt, auch wenn die Hohlschraube 12 nicht angezogen ist (linke Bildhälfte). Die Ansenkung 28 ist mindestens so tief wie der Dichtring 30 in axialer Richtung dick ist. Der Dichtring 30 ist dadurch in seiner gesamten Höhe von einer Umfangswandung 33 der Ansenkung 28 eingefaßt und kann beim Eindrehen und Anziehen der Hohlschraube 12 nicht in radialer Richtung aus der Ansenkung 28 herausgedrängt werden.

Ein Außendurchmesser des Rechteckdichtrings 30 ist in unverformtem Zustand größer als ein Durchmesser der Ansenkung 28, so daß der Rechteckdichtring 30 durch Klemmkraft in der Ansenkung 28 hält, um den Rechteckdichtring 30 gegen Herausfallen zu sichern, so lange die Hohlschraube 12 noch nicht eingeschraubt ist.

Ein ringscheibenförmiger Grund 34 der Ansenkung 28 bildet eine erste Dichtfläche der Dichtungsanordnung 10. Die eine Ringschulterfläche bildende, dem Bauteil 16 zugewandten Unterseite 36 des Sechskantflansches 18 der Hohlschraube 12 weist einen Bund 38 auf, dessen Stirnfläche 40 eine zweite Dichtfläche der Dichtungsanordnung 10 bildet. Der Bund 38 weist eine Spielpassung in bezug auf die Ansenkung 28 auf, um Gewinderundlaufabweichungen zu kompensieren. Der Bund 38 ragt bei angezogener Hohlschraube 12 in die Ansenkung 28 hinein und staucht den Rechteckdichtring 30 in axialer Richtung elastisch um ein bestimmtes Maß, das sich aus der Dicke des Rechteckdichtrings 30, der Tiefe der Ansenkung 28 und der Höhe des Bundes 38 ergibt. Der Rechteckdichtring 30 liegt dadurch unter Vorspannung dichtend an den beiden Dichtflächen 34, 40 der Dichtungsanordnung 10 an.

Um eine Tangentialkraft beim Anziehen der Hohlschraube 12 auf den Rechteckdichtring 30 klein zu halten, ist zwischen der Dichtfläche 40 und dem Dichtring 30 ein Gleitmittel vorgesehen. Das Gleitmittel ist beispielsweise an der der Dichtfläche 40 der Hohlschraube 12 zugewandten Stirnringfläche 42 des Dichtrings 30 angebracht, und/oder das Gleitmittel kann auch an der Dichtfläche 40 vorgesehen sein. Um zu verhindern, daß der Werkstoff des Rechteckdichtrings 30 unter Druckbeaufschlagung in einen Axialspalt zwischen Außenumfang des Bundes 38 an der Unterseite 36 des Rechteckflansches 18 der Hohlschraube 12 und der Umfangswandung 33 der Ansenkung 28 hineinfließt, kann eine dem Bund 38 zugewandte Außenkante des Rechteckdichtrings 30 mit einer Fase 44 versehen oder abgerundet sein.

Der Dichtring 30 besteht aus einem elastischen Werkstoff, vorzugsweise aus elastischem Kunststoff oder aus Gummi.

## Patentansprüche

1. Dichtungsanordnung für eine fluiddichte Verschraubung,
- mit einem eine Gewindebohrung (14) mit einer Ansenkung (28) aufweisenden Bauteil (16), wobei die Ansenkung (28) eine erste Dichtfläche (34) der Dichtungsanordnung bildet,
- mit einem in die Gewindebohrung (14) eingeschraubten Einschraubelement (12), wobei das Bauteil (16) radial außerhalb der Ansenkung (28) eine dem Einschraubelement (12) zugewandte Oberfläche (32) hat und das Einschraubelement (12) eine dem Bauteil (16) zugewandte radial überstehende Ringschulterfläche (36) aufweist, und
- mit einer Ringdichtung (30) in der Ansenkung (28) des Bauteils (16), wobei die Ansenkung (28) im Bauteil (16) mindestens so tief wie die Ringdichtung (30) dick ist, und das Einschraubelement (12) einen von der Ringschulterfläche (36) abstehenden Bund (38) aufweist, dessen Stirnfläche eine zweite Dichtfläche (40) bildet, wobei der Bund (38) in die Ansenkung (28) im Bauteil (16) hineinragt und die Ringdichtung (30) dichtend an der ersten Dichtfläche (34) und an der zweiten Dichtfläche (40) anliegt, **dadurch gekennzeichnet**, daß eine ringscheibenförmige Grundfläche (34) der Ansenkung (28) die erste Dichtfläche (34) bildet, daß das Einschraubelement (12) axial in die eine zylinderförmige Umfangswandung (33) aufweisende Ansenkung (28) hineinragt und die Ringdichtung (30) an die beiden Dichtflächen (34, 40) dichtend andrückt, wobei, wenn das Einschraubelement (12) mit dem Bauteil (16) fertig verschraubt ist, die Ringschulterfläche (36) radial außerhalb des axial abstehenden Bundes (38) fest an der Oberfläche (32) anliegt.

2. Dichtungsanordnung nach Anspruch 1, **dadurch gekennzeichnet,** daß die Ringdichtung (30) rechteckförmigen Schnurquerschnitt aufweist.

3. Dichtungsanordnung nach Anspruch 2, **dadurch gekennzeichnet,** daß die Ringdichtung (30) eine Fase (44), eine Abrundung oder dgl. an ihrer äußeren, dem Bund (38)des Einschraubelements (12) zugewandten Kante aufweist.

4. Dichtungsanordnung nach einem der Ansprüche 1 bis 3, **dadurch gekennzeichnet,** daß die Ringdichtung (30) aus einem elastischen Werkstoff besteht.

5. Dichtungsanordnung nach einem der Ansprüche 1 bis 4, **dadurch gekennzeichnet,** daß ein Außenumfang des Bundes (38) des Einschraubelements (12) eine Spielpassung in Bezug auf einen Durchmesser der Ansenkung (28) der Gewindebohrung (14) im Bauteil (16) aufweist.

6. Dichtungsanordnung nach einem der vorhergehenden Ansprüche, **dadurch gekennzeichnet,** daß ein Außendurchmesser der Ringdichtung (30) größer als der Durchmesser der Ansenkung (28) ist.

7. Dichtungsanordnung nach einem der vorhergehenden Ansprüche, **dadurch gekennzeichnet,** daß zwischen dem Bund (38) des Einschraubelements (12) und der Ringdichtung (30) ein Gleitmittel vorgesehen ist.

## Claims

1. Sealing arrangement for a fluid-tight screw connection,
- having a component (16) having a threaded hole (14) with a countersink (28), the countersink (28) forming a first sealing surface (34) of the sealing arrangement,
- having a screw-in element (12) screwed into the threaded hole (14), the component (16) having, radially outside the countersink (28), a surface (32) which faces the screw-in element (12) and the screw-in element (12) having a radially protruding annular shoulder surface (36) facing the component (16), and
- having an annular seal (30) in the countersink (28) of the component (16), the countersink (28) in the component (16) being at least as deep as the thickness of the annular seal (30), and the screw-in element (12) having a collar (38) which protrudes from the annular shoulder surface (36) and whose end surface forms a second sealing surface (40), the collar (38) protruding into the countersink (28) in the component (16) and the annular seal (30) bearing in a sealing manner against the first sealing surface (34) and against the second sealing surface (40), **characterized in that** a base surface (34), which is in the form of an annular disc, of the countersink (28) forms the first sealing surface (34), in that the screw-in element (12) projects axially into the countersink (28), which has a cylindrical circumferential wall (33), and presses the annular seal (30) in a sealing manner against the two sealing surfaces (34, 40), and, when the screw-in element (12) has been completely screwed to the component (16), the annular shoulder surface (36) radially outside the axially protruding collar (38) bears firmly against the surface (32).

2. Sealing arrangement according to Claim 1, **characterized in that** the annular seal (30) has a rectangular cord cross section.

3. Sealing arrangement according to Claim 2, **characterized in that** the annular seal (30) has a bevel (44), a rounded portion or the like at its outer edge facing the collar (38) of the screw-in element (12).

4. Sealing arrangement according to one of Claims 1 to 3, **characterized in that** the annular seal (30) consists of an elastic material.

5. Sealing arrangement according to one of Claims 1 to 4, **characterized in that** an outer circumference of the collar (38) of the screw-in element (12) has a clearance fit with regard to a diameter of the countersink (28) of the threaded hole (14) in the component (16).

6. Sealing arrangement according to one of the preceding claims, **characterized in that** an outside diameter of the annular seal (30) is larger than the diameter of the countersink (28).

7. Sealing arrangement according to one of the preceding claims, **characterized in that** a sliding means is provided between the collar (38) of the screw-in element (12) and the annular seal (30).

## Revendications

1. Dispositif d'étanchéité pour rendre étanche aux fluides une liaison par vissage, dans lequel,
• un composant (16) est percé d'un alésage fileté (14) présentant un décrochement (28) qui constitue une première portée d'étanchéité (34) du dispositif,
• un élément vissable (12) est engagé dans l'alésage fileté (14) et le composant (16) présente, disposé radialement à l'extérieur du décrochement (28), une portée supérieure (32) faisant face à l'élément vissable (12) qui lui-même présente, en regard du composant (16), une portée à épaulement annulaire (36) faisant saillie radialement,
• une bague d'étanchéité (30) est logée dans le décrochement (28) du composant (16), ce décrochement (28) présentant, dans le composant (16), une profondeur au moins égale à l'épaisseur de la bague (30), et
• l'élément vissable (12) présente un collet (38) en saillie sur la portée à épaulement annulaire (36) et dont la face frontale constitue une deuxième portée d'étanchéité (40), le collet (38) pénétrant dans le décrochement (28) du composant (16) et appliquant la bague d'étanchéité (30), de manière étanche sur la première portée d'étanchéité (34) et la deuxième portée d'étanchéité (40),
**caractérisé en ce que**
• le fond en forme d'anneau (34) du décrochement (28) constitue la première portée d'étanchéité (34),
• l'élément vissable (12) pénètre axialement dans le décrochement (28) que présente une paroi périphérique (33) de forme cylindrique, et
• la bague d'étanchéité (30) est appliquée de manière étanche sur les deux portées d'étanchéité (34, 40) de sorte que, quand l'élément (12) a fini d'être vissé dans le composant (16), la portée à épaulement annulaire (36) est appliquée fermement sur la portée supérieure (32), radialement à l'extérieur du collet (38) faisant saillie axialement.

2. Dispositif d'étanchéité selon la revendication 1,
**caractérisé en ce que**
la bague d'étanchéité (30) a une section rectangulaire.

3. Dispositif d'étanchéité selon la revendication 1,
**caractérisé en ce que**
la bague d'étanchéité (30), sur son bord externe en regard du collet (38) de l'élément vissable (12), présente un chanfrein (44), un arrondi ou analogue.

4. Dispositif d'étanchéité selon l'une quelconque des revendications 1 à 3,
**caractérisé en ce que**
la bague d'étanchéité (30) est faite d'un matériau élastique.

5. Dispositif d'étanchéité selon une quelconque des revendications 1 à 4,
**caractérisé en ce que**
la périphérie externe du collet (38) de l'élément vissable (12) présente un jeu d'ajustage adapté au diamètre du décrochement (28) de l'alésage fileté (14) du composant (16).

6. Dispositif d'étanchéité selon l'une quelconque des revendications précédentes,
**caractérisé en ce que**
le diamètre externe de la bague d'étanchéité (30) est supérieur au diamètre du décrochement (28).

7. Dispositif d'étanchéité selon l'une quelconque des revendications précédentes,
**caractérisé en ce qu**'
entre le collet (38) de l'élément vissable (12) et la bague d'étanchéité (30), il est prévu un moyen favorisant le glissement.
